# DEMANDE DE BREVET EUROPEEN

(11) **EP 1 184 263 A1**
(43) Date de publication de la demande: **06.03.2002**
(21) Numéro de dépôt: 01402171.1
(22) Date de dépôt: 14.08.2001
(51) Int. Cl.: B62D 21/15

(54) **Ensemble de structure de caisse comportant des moyens de fixation d'un organe**

(30) Priorité: 29.08.2000 FR 0011043
(71) Demandeur: Renault, 92109 Boulogne Billancourt (FR)
(72) Inventeur: Yvetot, Marc, 75015 Paris (FR)

(57) **Abrégé**

L'invention propose un ensemble de structure de caisse de véhicule automobile, du type qui comporte un élément de structure de caisse qui porte des organes (26) du véhicule, et qui comporte une cellule rigide formant habitacle du véhicule automobile, du type dans lequel l'élément de structure de caisse comporte au moins deux longerons (14) qui s'étendent à partir de la cellule et qui sont susceptibles, sous l'effet d'un choc de direction (L) sensiblement longitudinale, de se déformer en s'écrasant longitudinalement, caractérisé en ce qu'au moins un des organes (26) du véhicule est fixé sur au moins un longeron (14) par l'intermédiaire d'au moins deux moyens rigides de fixation, notamment deux vis (34), alignés suivant la direction transversale (T) de façon que le matériau du longeron (14) conserve des caractéristiques de déformation homogènes en cas de choc.

## Description

L'invention concerne un ensemble de structure de caisse de véhicule automobile.

L'invention concerne plus particulièrement un ensemble de structure de caisse de véhicule automobile, du type qui comporte un élément de structure de caisse qui porte des organes du véhicule, et qui comporte une cellule rigide formant habitacle du véhicule automobile, du type dans lequel l'élément de structure de caisse comporte au moins deux longerons qui s'étendent à partir de la cellule et qui sont susceptibles, sous l'effet d'un choc de direction sensiblement longitudinale, de se déformer en s'écrasant longitudinalement.

On connaît de nombreux exemples d'ensembles de structure de caisse du type décrit précédemment.

Dans la plupart de ceux-ci, un organe mécanique du véhicule est fixé aux longerons du véhicule par l'intermédiaire d'au moins trois points rigides de fixation, de façon à obtenir un appui isostatique dudit organe sur les longerons. Les points rigides de fixation peuvent notamment comporter au moins deux vis.

Par exemple, une traverse transversale peut généralement être fixée de cette manière aux longerons sensiblement longitudinaux du véhicule. La traverse est fixée à chacune de ses extrémités sur le longeron correspondant par l'intermédiaire de trois vis non alignées, ou bien par l'intermédiaire de deux vis, alignées sensiblement suivant la direction longitudinale du longeron, avec éventuellement un appui supplémentaire mettant en jeu deux emboutis complémentaires de l'organe mécanique et du longeron.

Cette disposition présente un inconvénient majeur en cas de choc longitudinal.

En effet, la présence de trois points rigides de fixation ou de deux points rigides de fixation alignés longitudinalement augmente localement la raideur de compression du matériau du longeron au voisinage des fixations, ce qui a pour effet de réduire d'autant sa capacité à se déformer en s'écrasant longitudinalement.

Or, il est souhaitable que l'élément de structure de caisse puisse s'écraser de façon à absorber la majeure partie de l'énergie cinétique résultant du choc, afin d'éviter que les efforts de déformation ne se propagent jusqu'à la cellule rigide du véhicule.

Pour remédier à cet inconvénient, l'invention propose des moyens de fixation qui n'amoindrissent pas les capacités d'écrasement longitudinal du longeron.

Dans ce but, l'invention propose un ensemble de structure de caisse de véhicule automobile du type précédemment décrit, caractérisé en ce qu'au moins un des organes du véhicule est fixé sur au moins un longeron par l'intermédiaire d'au moins deux moyens rigides de fixation, alignés suivant la direction transversale.

Selon d'autres caractéristiques de l'invention :
- l'organe s'étend sensiblement suivant la direction transversale et est fixé aux deux longerons,
- l'organe est fixé sur les deux longerons par l'intermédiaire de deux paires de moyens rigides de fixation alignés sensiblement transversalement, pour former une charnière permettant le découplage vibratoire entre les longerons et l'organe,
- les moyens rigides de fixation sont des vis.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un élément de structure de caisse de véhicule automobile comportant deux longerons longitudinaux supérieurs en dessous desquels des jambes de suspension sont fixées conformément à l'invention, et
- la figure 2 est une vue de détail selon la figure 1 de la fixation des jambes de suspension sous les longerons longitudinaux supérieurs.

Dans la description qui va suivre, des chiffres de référence identiques désignent des pièces identiques ou ayant des fonctions similaires.

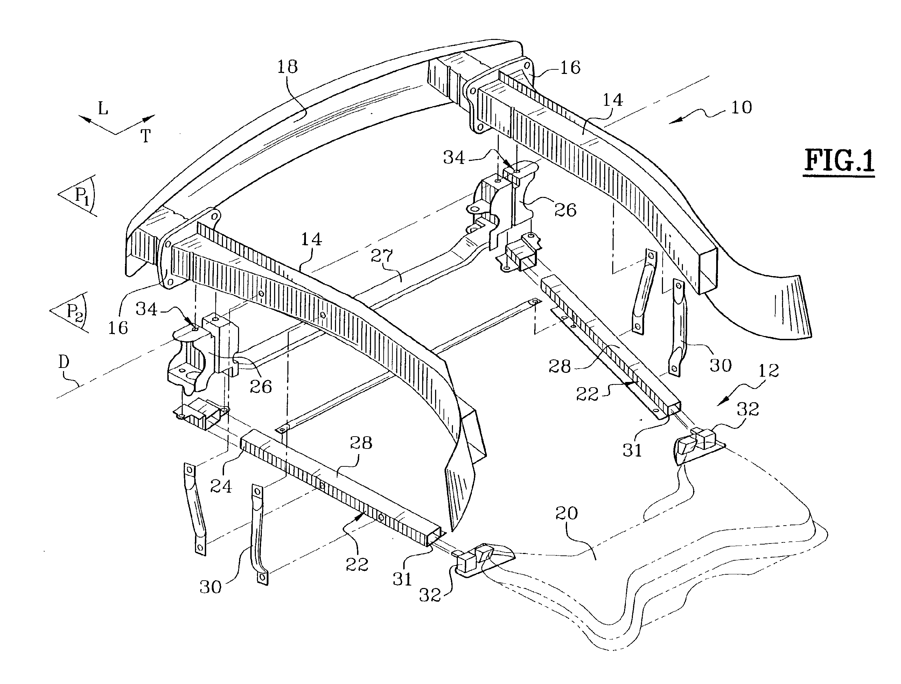

On a représenté à la figure 1 un élément 10 de structure de caisse de véhicule automobile.

L'élément 10 de structure de caisse, de direction sensiblement longitudinale "L" , forme notamment support pour des organes mécaniques du véhicule et il est situé, au niveau de son extrémité arrière 12 qui est représentée sur la droite de la figure 1, dans le prolongement d'une cellule rigide (non représentée) formant habitacle du véhicule automobile pour former un ensemble de structure de caisse du véhicule.

L'élément 10 de structure de caisse comporte, dans un premier plan "P₁" horizontal supérieur, au moins deux longerons 14 longitudinaux supérieurs qui s'étendent vers l'avant à partir de la cellule et dont les extrémités avant 16 sont réunies par une poutre transversale 18, qui peut notamment servir de support pour un bouclier et/ou une façade avant (non représentés) du véhicule.

Dans un second plan "P₂" horizontal inférieur, l'élément 10 de structure de caisse comporte un berceau moteur inférieur 20 qui s'étend vers l'avant à partir de la cellule, et deux longerons 22 longitudinaux inférieurs qui s'étendent en dessous et au droit des longerons supérieurs 14. Les longerons inférieurs 22 sont fixés au niveau de leurs extrémités avant 24 à des jambes de suspension 26 qui sont fixées aux extrémités avant 16 des longerons supérieurs, leurs parties intermédiaires 28 sont liées chacune au longeron supérieur associé 14 par au moins un tirant 30, et leurs extrémités arrière 31 sont agencées avec jeu en regard d'éléments 32 de réception du berceau moteur 20 pour transmettre au berceau 20 les efforts de déformation résultant d'un choc sans déformer les longerons supérieurs 14.

Conformément à l'invention, les organes que forment les jambes de suspension 26 sont fixés aux extrémités avant 16 des longerons 14 par l'intermédiaire d'au moins deux moyens 34 rigides de fixation qui sont alignés suivant la direction transversale "T" de façon que le matériau des longerons 14 conserve des caractéristiques de déformation homogènes en cas de choc.

Il sera compris que l'exemple illustré dans la présente description n'est pas limitatif de l'invention, et que celle-ci trouve à s'appliquer à tout organe destiné à être fixé sur ou sous les longerons supérieurs 14, par exemple un support de batterie (non représenté) qui serait fixé sur un des longerons supérieurs 14.

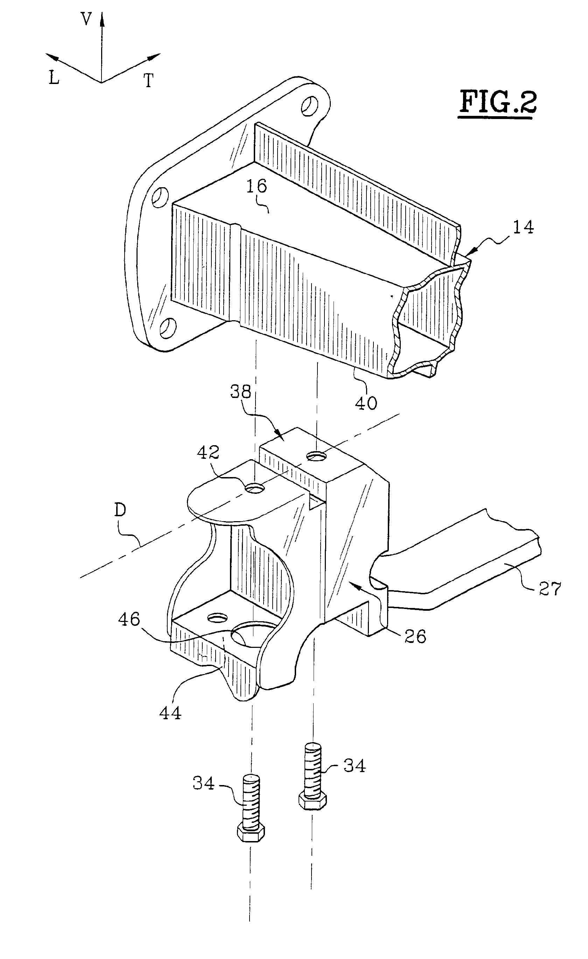

La figure 2 illustre un mode de réalisation préféré de l'invention.

Dans cette configuration, on a représenté la fixation d'une jambe de suspension 26 réalisée sous la forme d'un boîtier en tôle de direction générale verticale "V" qui est fixé sous le longeron supérieur 14, et qui présente sensiblement, en section suivant la direction transversale "T", la forme de deux "C" accolés dos à dos. Le longeron 14 supérieur s'étend sensiblement suivant la direction longitudinale "L" et est sensiblement tubulaire.

La jambe 26 de suspension comporte une face d'appui 38 horizontale plane, qui est formée de la réunion des deux branches supérieures des "C", et qui est destinée à être fixée sous une face inférieure 40 horizontale plane du longeron supérieur 14.

La face supérieure 38 est percée de deux perçages 42 qui sont alignés suivant une droite "D" de direction sensiblement transversale, parallèle à la direction "T". Les perçages 42 sont agencés en regard de perçages taraudés (non représentés) qui sont agencés dans la face inférieure 40 du longeron supérieur 14.

Une face inférieure 44 de la jambe 26 de suspension comporte des lumières 46 qui sont agencées au droit des perçages 42 pour permettre le passage du bas vers le haut, et le serrage au moyen d'un outil approprié, de vis 34 qui constituent les moyens rigides de fixation.

De la sorte, la fixation de la jambe 26 de suspension permet, lorsque le longeron supérieur 14 est soumis à un choc de direction longitudinale "L" de ne pas modifier les caractéristique de son matériau, car l'alignement des vis 34 permet de former une charnière qui permet de surcroît de découpler en termes de vibrations le longeron 14 et la jambe 26 de suspension en réalisant une fixation pendulaire de la jambe 26.

L'application de l'invention n'est évidemment pas limitée à une fixation par vis. Les moyens 34 rigides de fixation pourraient être assurés par tout autre système de fixation présentant une rigidité suffisante.

Avantageusement, l'invention trouve aussi à s'appliquer pour un organe qui est fixé à la fois sur les deux longerons supérieurs 14.

Comme illustré à la figure 1, l'organe peut être formé de l'ensemble des deux jambes suspensions 26 et d'une traverse 27 qui les relie. L'ensemble ainsi formé s'étend sensiblement suivant la direction transversale "T"' et est fixé aux deux longerons supérieurs 14.

Dans ce cas l'ensemble formé des deux jambes de suspensions 26 et de la traverse 27 est fixé sur les deux longerons supérieurs 14 par l'intermédiaire de deux paires de moyens rigides de fixation alignés transversalement, c'est à dire dans le mode préféré de réalisation de l'invention, de quatre vis alignées du type des vis 34 précédemment décrites, pour former une charnière permettant le découplage vibratoire entre les longerons 14 et l'organe.

Dans le mode de réalisation préféré de l'invention, les vis 34 de chaque paire de vis 34 sont rigoureusement alignées suivant la direction transversale "T". On comprendra toutefois que, sans modifier les caractéristiques de l'invention, une vis 34 d'une paire de vis 34 pourrait présenter un décalage réduit suivant la direction longitudinale par rapport à l'autre vis 34 de la même paire. A titre indicatif, un tel décalage pourrait être de l'ordre de huit millimètres.

L'invention permet ainsi de réaliser des fixations d'organes sur l'élément 10 de structure de caisse sans amoindrir ses capacités d'écrasement longitudinal en cas de choc frontal du véhicule.

## Revendications

1. Ensemble de structure de caisse de véhicule automobile, du type qui comporte un élément (10) de structure de caisse qui porte des organes (26) du véhicule, et qui comporte une cellule rigide formant habitacle du véhicule automobile, du type dans lequel l'élément (10) de structure de caisse comporte au moins deux longerons (14) qui s'étendent à partir de la cellule et qui sont susceptibles, sous l'effet d'un choc de direction (L) sensiblement longitudinale, de se déformer en s'écrasant longitudinalement,
**caractérisé en ce qu'**au moins un des organes (26) du véhicule est fixé sur au moins un longeron (14) par l'intermédiaire d'au moins deux moyens rigides de fixation, alignés sensiblement suivant la direction transversale (T) de façon que le matériau du longeron (14) conserve des caractéristiques de déformation homogènes en cas de choc.

2. Ensemble selon la revendication précédente, **caractérisé en ce que** l'organe (26) s'étend sensiblement suivant la direction transversale (T) et est fixé aux deux longerons (14).

3. Ensemble selon la revendication précédente, **caractérisé en ce que** l'organe (26) est fixé sur les deux longerons (14) par l'intermédiaire de deux paires de moyens rigides de fixation alignés sensiblement transversalement, pour former une charnière permettant le découplage vibratoire entre les longerons (14) et l'organe (26).

4. Ensemble selon l'une quelconque des revendications précédentes, **caractérisé en ce que** les moyens rigides de fixation sont des vis (34).
